(19) **Europäisches Patentamt**

**European Patent Office**

**Office européen des brevets**

(11) **EP 0 973 109 A1**

(12) **EUROPEAN PATENT APPLICATION**

(43) Date of publication:
**19.01.2000 Bulletin 2000/03**

(51) Int. Cl.7: **G06F 17/60**

(21) Application number: **98830433.3**

(22) Date of filing: **15.07.1998**

(84) Designated Contracting States:
**AT BE CH CY DE DK ES FI FR GB GR IE IT LI LU MC NL PT SE**
Designated Extension States:
**AL LT LV MK RO SI**

(71) Applicant:
**STMicroelectronics S.r.l.**
**20041 Agrate Brianza (Milano) (IT)**

(72) Inventors:
- **Gandolfi, Luciano**
  **20094 Corsico (IT)**
- **Micheletti, Armando**
  **20126 Milan (IT)**

(74) Representative:
**Modiano, Guido, Dr.-Ing. et al**
**Modiano & Associati SpA**
**Via Meravigli, 16**
**20123 Milano (IT)**

(54) **Method for automatically sequencing the processing of work batches of a manufacturing department**

(57) A method for automatically sequencing the processing of work batches of a manufacturing department, characterized in that it comprises the steps of:

-- determining the initial conditions of a production department, the technical position of batches of products to be processed, and the availability of the machines for processing;
-- determining a vector whose components are, for each batch, the average number of operations per day to be performed in order to meet a set delivery deadline for that given batch;
-- applying a genetic algorithm in order to minimize the distance between the forecast values related to the average number of operations per day executable within an assigned time period and the target values to be reached for said given batch;
-- constructing sequences for the loading of batches onto the machine; and
-- iterating the above steps.

**EP 0 973 109 A1**

## Description

The present invention relates to a method for automatically sequencing the processing of work batches of a manufacturing department.

It is known that production scheduling in manufacturing industries and the like is increasingly important in view of economies of scale, scheduling the purchase of raw materials, and meeting customer demand.

Currently, the solutions proposed for production scheduling resort to decisions taken by human beings in a non-automated manner. Moreover, it is not possible to make forecasts such as the situation of the batches in production that might occur in a few from the present time.

The aim of the present invention is to provide a method for automatically sequencing the processing of work batches of a manufacturing department.

Within the scope of this aim, an object of the present invention is to provide a method for automatically sequencing the processing of work batches of a manufacturing department which allows to manage all batches automatically.

Another object of the present invention is to provide a method for automatically sequencing the processing of work batches of a manufacturing department which allows to make processing forecasts.

Another object of the present invention is to provide a method for automatically sequencing the processing of work batches of a manufacturing department which is highly reliable, relatively easy to provide and at competitive costs.

This aim, these objects and others which will become apparent hereinafter are achieved by a method for automatically sequencing the processing of work batches of a manufacturing department, characterized in that it comprises the steps of:

-- determining the initial conditions of a production department, the technical position of batches of products to be processed, and the availability of the machines for processing;
-- determining a vector whose components are, for each batch, the average number of operations per day to be performed in order to meet a set delivery deadline for that given batch;
-- applying a genetic algorithm in order to minimize the distance between the forecast values related to the average number of operations per day executable within an assigned time period and the target values to be reached for said given batch;
-- constructing sequences for the loading of batches onto said machine; and
-- iterating the above steps.

Further characteristics and advantages of the invention will become apparent from the description of a preferred embodiment of the method according to the invention, which is described hereinafter.

Consider a set of batches of products being processed, and call L the set of batches and I each batch that belongs to the set of batches L.

The following data are known for each batch l:

-- the expected delivery date, $TD_l$ being the average number of operations per day to be executed in order to meet the assigned delivery deadline for the batch l;
-- detailed production flow, list of operations and resources required for their execution.

Let TD be a vector whose components are values $TD_l$.

Let P be a set of indices which can be assigned to the batches l of L, for example numbers belonging to a range of the set of natural numbers.

It is then necessary to define a sort operation on the set P; this sort relation is designated by $O_P$.

Given a current instant $t_0$, let $Q_S \subseteq L$ be the set of all the batches l that are physically and technically available for processing on an assigned machine S. In this case, the processing queue of the machine S is designated by $Q_S$.

Given a batch $l \in Q_S$, let $t_1 \le t_o$ be the smallest instant for which $1 \in Q_S$ is true.

Let U be a random variable which is uniformly distributed over the range [0,1].

Let F be the set of all mappings of L on P, i.e., the set of all the maps in which there is a one-to-one correspondence between an l that belongs to the set of batches L and a only one p that belongs to P.

Let us then determine a sort relation on the queue $Q_S$, indicated by $O_Q$, which is defined by:

given two indices i and $j \in P$ and two batches $l_j$ and $l_i \in Q_S$:

if $i < j$ then $l_j < l_i$ else
if $t_i < t_j$ then $l_j < l_i$ else
if $U \le 0.5$ then $l_j < l_i$ else
let $l_j < l_i$

Clearly, $O_q = O_q(f)$ for $f \in F$.

Let us now define a loading rule for a machine S, designated by R and defined by:

construction of the queue $Q_S$ and sorting of $Q_S$ according to the sort relation $O_q(f)$.

The loading rule R of the machine S also requires that the first batch belonging to $Q_S$ must be processed. If S allows the processing of multiple batches l, loading is performed in the order defined by the sort relation $O_Q$.

The loading rule R of the machine S is a function of the mappings f that belong to the set F of all mappings of the set of batches L on the set P of indices that can be assigned to the batches of L.

Once the relation according to which the loading rule of each machine S, designated by R, is a function of f has been assigned, a model for simulating the production department is defined which is designated by M=M(R) and allows, for each batch l, to formulate a forecast TE regarding the average number of operations per day performed within an assigned time period.

Let the forecast TE be a vector whose components are the values $TE_l$.

The method according to the invention provides for the application of a generational genetic algorithm G which acts on the set F of the mappings of L on P.

The genetic algorithm G is a known search algorithm based on natural-selection and genetic-generational mechanisms, which utilize history data to speculate about new search points yielding an improved expected performance.

In this regard, reference should be made to the following publications:

1. "Adaptation in natural and artificial systems", Bradford Book, The MIT Press, 1992.
2. "Genetic Algorithms in Search Optimization and Machine Learning", David E. Goldberg, Addison Wesley Publishing Company.
3. "Uniform Cross-Over in Genetic Algorithms" (ICGA89], Gilbert Syswerda.

The goal of the genetic algorithm is also to achieve minimization between the forecasted values and their target, i.e., minimization of the distance d=d(TE(f),TD) . The algorithm G terminates if it reaches a maximum set number of iterations.

The method according to the present invention for automatically sequencing the processing of work batches l of a manufacturing department provides for the following steps.

First of all, the initial condition of the production department, the technical position of the batches l and the availability of the machines S are determined.

At this point, the forecast delivery date is determined by defining the vector TD, whose components correspond to the average number of operations per day $TD_l$ to be performed in order to meet the assigned delivery date.

Then the genetic algorithm G is applied in order to determine a machine mapping of L on P, referenced by $F_m$, which is a member of F and minimizes the distance d(TE)f),TD).

At this point the sequences for loading the machine S are constructed by utilizing the loading rule R as a function of the mapping $f_m$ determined by means of the genetic algorithm G.

The method then provides for return to the initial step in which the condition of the production department is determined, in order to redefine the expected delivery date.

The above-described method allows to manage all the batches l of a set L of batches automatically and without relying on human decisions anymore.

The above-described method also allows to forecast the situation of production.

In practice it has been observed that the method according to the invention fully achieves the intended aim and objects.

The method thus conceived is susceptible of numerous modifications and variations, all of which are within the scope of the inventive concept; all the details may also be replaced with other technically equivalent elements.

## Claims

1. A method for automatically sequencing the processing of work batches of a manufacturing department, characterized in that it comprises the steps of:

   -- determining the initial conditions of a production department, the technical position of batches of products to be processed, and the availability of the machines for processing;
   -- determining a vector whose components are, for each batch, the average number of operations per day to be performed in order to meet a set delivery deadline for that given batch;
   -- applying a genetic algorithm in order to minimize the distance between the forecast values related to the average number of operations per day executable within an assigned time period and the target values to be reached for said given batch;
   -- constructing sequences for the loading of batches onto said machine; and
   -- iterating the above steps.

2. The method according to claim 1, characterized in that said genetic algorithm has a nil probability associated with the inversion operator.

3. The method according to claim 1, characterized in that the crossover operator of said genetic algorithm is uniform.

4. The method according to one or more of the preceding claims, characterized in that the construction of the loading sequences of the machines on which said batches must be processed comprises the steps of:

   -- determining a set of batches that are physically and technically available for processing on said machine;
-- sorting said batches that are physically and technically available for processing on said machine according to a specific sort relation;
-- processing the first batch that belongs to said batches that are available for said machine.

5. The method according to claim 4, characterized in that the construction of the loading sequences of said machine provides for the loading of said batches in the order deduced from said sorting.

6. The method according to one or more of the preceding claims, characterized in that said target values are obtained by applying a simulation model in order to formulate, for each batch, a forecast as to the average number of operations per day that can be executed within a set time period.

7. The method according to one or more of the preceding claims, characterized in that said genetic algorithm terminates when a maximum assigned number of iterations has been reached.

8. The method according to one or more of the preceding claims, characterized in that it comprises one or more of the described and/or illustrated steps.

**European Patent Office**

**EUROPEAN SEARCH REPORT**

Application Number

EP 98 83 0433

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | TAMAKI H ET AL: "Genetics-based machine learning approach to production scheduling-a case of in-tree type precedence relation" IEEE INTERNATIONAL SYMPOSIUM ON INDUSTRIAL ELECTRONICS. PROCEEDINGS. ISIE'98 (CAT. NO.98TH8357), IEEE INTERNATIONAL SYMPOSIUM ON INDUSTRIAL ELECTRONICS. PROCEEDINGS. ISIE'98, PRETORIA, SOUTH AFRICA, 7-10 JULY 1998, pages 714-719 vol.2, XP002090759 ISBN 0-7803-4756-0, 1998, New York, NY, USA, IEEE, USA | 1-5,7,8 | G06F17/60 |
| Y | * page 714, column 1, line 39 - page 715, column 1, line 12 * <br> * page 715, column 2, line 17 - line 39 * <br> * page 716, column 2, line 14 - line 39 * | 6 | |
| Y | JONES A ET AL: "Development of a predictive-reactive scheduler using generic algorithms and simulation-based scheduling software for "generic" read "genetic"" ADVANCED MANUFACTURING PROCESSES, SYSTEMS, AND TECHNOLOGIES (AMPST 96), PROCEEDINGS OF 1ST INTERNATIONAL SYMPOSIUM ON ADVANCED MANUFACTURING PROCESSES, SYSTEMS AND TECHNOLOGIES, BRADFORD, UK, 26-27 MARCH 1996, pages 589-598, XP002090760 ISBN 0-85298-989-X, 1996, Bury St Edmunds, UK, Mech. Eng. Publications, UK * page 594, line 1 - line 12 * | 6 | TECHNICAL FIELDS SEARCHED (Int.Cl.6) <br> G06F |
| A | US 5 651 098 A (INOUE HARUKI ET AL) 22 July 1997 * column 2, line 22 - line 63 * * column 8, line 31 - column 9, line 7 * * figures 12,27 * | 1-8 | |

-/--

The present search report has been drawn up for all claims

| Place of search | Date of completion of the search | Examiner |
|---|---|---|
| THE HAGUE | 22 January 1999 | Pedersen, N |

EPO FORM 1503 03.82 (P04C01)

**European Patent Office**

**EUROPEAN SEARCH REPORT**

Application Number

EP 98 83 0433

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | YAMADA T ET AL: "Solving the C/sub sum/ permutation flowshop scheduling problem by genetic local search" 1998 IEEE INTERNATIONAL CONFERENCE ON EVOLUTIONARY COMPUTATION PROCEEDINGS. IEEE WORLD CONGRESS ON COMPUTATIONAL INTELLIGENCE (CAT. NO.98TH8360), 1998 IEEE INTERNATIONAL CONFERENCE ON EVOLUTIONARY COMPUTATION PROCEEDINGS. IEEE WORLD CONGRESS ON COMPU, pages 230-234, XP002090761 ISBN 0-7803-4869-9, 1998, New York, NY, USA, IEEE, USA * page 232, column 1, line 22 - page 233, column 1, line 17 * * figures 3,4 * | 1-8 | |
| A | PATENT ABSTRACTS OF JAPAN vol. 097, no. 003, 31 March 1997 & JP 08 315028 A (NIPPON TELEGR &AMP;TELEPH CORP &LT;NTT&GT;), 29 November 1996 * abstract * | 1-8 | |
| A | SANNOMIYA N ET AL: "Application of genetic algorithm to scheduling problems in manufacturing processes" PROCEEDINGS OF 1996 IEEE INTERNATIONAL CONFERENCE ON EVOLUTIONARY COMPUTATION (ICEC'96) (CAT. NO.96TH8114), PROCEEDINGS OF IEEE INTERNATIONAL CONFERENCE ON EVOLUTIONARY COMPUTATION, NAGOYA, JAPAN, 20-22 MAY 1996, pages 523-528, XP002090762 ISBN 0-7803-2902-3, 1996, New York, NY, USA, IEEE, USA * page 524, column 1, line 26 - page 526, column 1, line 21 * | 1-8 | TECHNICAL FIELDS SEARCHED (Int.Cl.6) |

-/--

The present search report has been drawn up for all claims

| Place of search | Date of completion of the search | Examiner |
|---|---|---|
| THE HAGUE | 22 January 1999 | Pedersen, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 98 83 0433

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,A | SYSWERDA G: "Uniform crossover in Genetic Algorithms" PROCEEDINGS OF THE THIRD INTERNATIONAL CONFERENCE ON GENTIC ALGORITHMS, 4 - 7 June 1989, pages 2-9, XP002090763 George Mason University * page 1, column 1, line 1 - column 2, line 31 * | 3 | |
| | | | TECHNICAL FIELDS SEARCHED (Int.Cl.6) |

The present search report has been drawn up for all claims

| Place of search | Date of completion of the search | Examiner |
|---|---|---|
| THE HAGUE | 22 January 1999 | Pedersen, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**

EP 98 83 0433

This annex lists the patent family members relating to the patent documents cited in the above-mentioned European search report.
The members are as contained in the European Patent Office EDP file on
The European Patent Office is in no way liable for these particulars which are merely given for the purpose of information.

22-01-1999

| Patent document cited in search report | Publication date | Patent family member(s) | Publication date |
|---|---|---|---|
| US 5651098 A | 22-07-1997 | JP 7105180 A<br>JP 7141318 A<br>JP 7262016 A | 21-04-1995<br>02-06-1995<br>13-10-1995 |

EPO FORM P0459

For more details about this annex : see Official Journal of the European Patent Office, No. 12/82